# EUROPÄISCHE PATENTSCHRIFT

(11) **EP 1 789 701 B1**
(45) Veröffentlichungstag und Bekanntmachung des Hinweises auf die Patenterteilung: **26.03.2008**
(21) Anmeldenummer: 05770115.3
(22) Anmeldetag: 08.08.2005
(51) Int. Cl.: F16H 57/02, B28C 5/42

(54) **GETRIEBE ZUM ANTRIEB EINER TROMMEL EINES FAHRMISCHERS**
GEAR TRAIN FOR DRIVING A MIXER DRUM MOUNTED ON A VEHICLE
TRANSMISSION POUR ENTRAINER LE TAMBOUR D'UN MALAXEUR

(30) Priorität: 07.08.2004 DE 102004038506
(43) Veröffentlichungstag der Anmeldung: 30.05.2007
(73) Patentinhaber: ZF FRIEDRICHSHAFEN AG, 88038 Friedrichshafen (DE)
(72) Erfinder: HEILIG, Eduard, 88048 Friedrichshafen (DE)
(86) Internationale Anmeldenummer: PCT/EP2005/008587
(87) Internationale Veröffentlichungsnummer: WO 2006/015838

(56) Entgegenhaltungen:
- EP-A- 1 186 390
- DE-A1- 2 341 250
- FR-A- 2 221 029
- SU-A1- 1 364 486
- US-A- 5 820 258
- PATENT ABSTRACTS OF JAPAN Bd. 005, Nr. 057 (M-064), 18. April 1981 (1981-04-18) -& JP 56 010848 A (TOYO SEIMITSU ZOKI KK), 3. Februar 1981 (1981-02-03)

## Beschreibung

Die vorliegende Erfindung betrifft ein Getriebe, insbesondere zum Antrieb einer Trommel eines Fahrmischers nach der im Oberbegriff von Anspruch 1 näher definierten Art. Ein solches Getriebe ist aus der FR 2 221 029 A bekannt.

Getriebe zum Antrieb einer Trommel eines Fahrmischers werden verwendet, um die Trommel des Fahrmischers in Drehbewegung zu versetzen und hierbei bei der Drehbewegung einziehen, das Befüllen der Trommel zu erleichtern und bei der Drehbewegung entleeren, das Mischgut in der Trommel, beispielsweise der Transportbeton aus der Trommel zu fördern**.** Neben der Abgabe von Drehmoment an die Trommel, um diese in eine Drehbewegung zu versetzen, hat das Getriebe die Funktion, die Gewichtskraft der Trommel und deren Inhalt aufzunehmen. Zusätzlich muss das Getriebe Relativbewegungen zwischen der Trommel und dem Fahrzeugrahmen ausgleichen, welche beispielsweise bei beladener Trommel und Fahrt in unebenem Gelände auftritt. Hierfür ist das Getriebe auf einem Sockel montiert, welcher mit dem Fahrzeugrahmen in Verbindung steht und an der Trommel angeflanscht. Das Getriebe muss kompakt ausgeführt sein, da zwischen der Trommel und dem Fahrerhaus des Fahrzeugs nur ein geringer Bauraum vorhanden ist.

Die EP 1 186 390 B1 offenbart ein Getriebe für einen Antrieb einer Mischtrommel, bei welchem ein hydraulischer Motor einerseits direkt mit einem Planetenträger eines Planetengetriebes und andererseits mit einem ortsfesten Gehäuseteil verbunden ist. Der Rotationszylinder des hydraulischen Motors treibt ein inneres Zentralrad des Planetengetriebes an, dessen äußeres Zentralrad den Abtrieb bildet und mit der Mischtrommel in Verbindung steht. Die Mischtrommel ist im Getriebe über ein Lager gelagert, welches auf dem ortsfesten Gehäuse angeordnet ist und dadurch nur mit einem großen Durchmessen, welcher hohe Kosten verursacht, ausgeführt werden kann.

Der vorliegenden Erfindung liegt die Aufgabe zugrunde, ein kompaktes Getriebe zum Antrieb einer Mischtrommel zu schaffen, welches sich durch eine kostengünstige Lagerung auszeichnet.

Die Aufgabe wird mit einem, auch die kennzeichnenden Merkmale des Hauptanspruchs aufweisenden, gattungsgemäßen Getriebe gelöst.

Erfindungsgemäß treibt ein Radialkolbenmotor ein inneres Zentralrad eines Planetengetriebes an, dessen äußeres Zentralrad den Abtrieb bildet und mit einem Abtriebsflansch verbunden ist, oder mit diesem einstückig ausgebildet ist und dessen Planetenträger drehfest mit einem ortsfesten Gehäuseteil verbunden ist, mit welchem die Kurvenscheibe des hydraulischen Motors in Verbindung steht. Zwischen dem Planetenträger und der Kurvenscheibe des hydraulischen Motors ist die Lagerung des Abtriebsflansches angeordnet. Dadurch ist es möglich, den Durchmesser dieser Lagerung so zu wählen, dass kostengünstige Lager verwendet werden können. Vorzugsweise werden Kegelrollenlager verwendet, es besteht jedoch auch die Möglichkeit, andere Lagerungen, wie beispielsweise Axialrollenlager in Verbindung mit Radialrollenlager, Tonnenlager oder Rillenkugellager, sowie Gleitlager zu verwenden. In einer weiteren Ausgestaltungsform der Erfindung besteht das ortsfeste Gehäuseteil aus einem Flansch, an welchem die Kurvenscheibe des hydraulischen Motors angeflanscht ist und aus einem Zapfen, welcher mit dem Planetenträger verbunden ist und auf welchem sich die Innenringe der Lagerung befinden. In einer weiteren Ausgestaltungsform ist der Planetenträger über eine Mitnahmeverzahnung mit diesem Zapfen verbunden. Hierbei ist der Planetenträger so ausgestaltet, dass die Verzahnung in einer Bohrung des Planetenträgers angeordnet ist. Die axiale Fixierung des mindestens einen innenrings der Lagerung kann hierbei über eine Anlagefläche am Planetenträger und eine Anlagefläche am ortsfesten Gehäuseteil erreicht werden, wobei der Planetenträger über axiale Verbindungsmittel, wie beispielsweise einer Nutmutter, mit dem ortsfesten Gehäuseteil verbunden wird. In einer weiteren Ausgestaltungsform der Erfindung ist der Planetenträger über eine Mitnahmeverzahnung in einer Bohrung des feststehenden Gehäuseteils angeordnet und mit diesem verbunden. Hierbei besteht die Möglichkeit, die Lagerung auf dem Planetenträger bzw. dessen Zapfen anzuordnen. In einer weiteren Ausgestaltungsform der Erfindung ist der Planetenträger über eine Passstift-Verbindung mit dem ortsfesten Gehäuseteil verbunden und in axialer Richtung über Verbindungselemente, wie beispielsweise Schrauben, gesichert. Die Lagerung kann hierbei entweder auf dem ortsfesten Gehäuseteil, dem Planetenträger oder auf beiden angeordnet sein, um eine Zentrierwirkung zu erreichen. Erfindungsgemäß stützt sich der Rotationszylinder des hydraulischen Motors über eine Lagerung in axialer Richtung im ortsfesten Gehäuseteil ab, wobei die Lagerung als Gleit- oder Wälzlagerung ausgebildet sein kann. In einer weiteren Ausgestaltungsform der Erfindung bildet das Gehäuse, in welchem sich das Planetengetriebe befindet, und der hydraulische Motor ein gemeinsames Druckmittelreservoir, wodurch dir Verzahnungsbauteile und der hydraulische Motor mit Schmiermittel versorgt werden. Es besteht jedoch auch die Möglichkeit, zwischen dem ortsfesten Gehäuseteil und dem inneren Zentralrad ein Dichtelement anzuordnen, welches es ermöglicht, das Planetengetriebe und den hydraulischen Motor mit getrennten Ölhaushalten zu betreiben. Indem die äußere Kurvenscheibe an den Flansch des ortsfesten Gehäuseteils angeflanscht ist, besteht die Möglichkeit, Standardhydraulikmotoren zu verwenden und diese an das Getriebegehäuseteil anzuflanschen. In einer weiteren Ausgestaltungsform ist das ortsfeste Gehäuseteil mit einem Fuß verbunden oder mit diesem einstückig ausgebildet, welcher über Verbindungselemente und einem Lagerbock mit dem Fahrzeugrahmen verbunden ist. In einer weiteren Ausgestaltungsform der Erfindung befindet sich zwischen dem Fuß und dem Lagerbock ein elastisches Verbindungselement, welches es ermöglicht, Relativbewegungen des Fahrzeugrahmens zur Mischtrommel auszugleichen. Vorzugsweise besteht dieses elastische Element aus einem elastischen Mittelteil, welches mit je einer metallischen Trägerplatte verbunden ist, welche über Verbindungselemente, wie beispielsweise Schrauben oder Gewindestifte, einerseits und andererseits mit dem Fuß des Gehäuses verbunden sind.

Durch die Getriebeanordnung ist es möglich, ein axial kurzbauendes Getriebe zu schaffen, welches sich durch eine kostengünstige Lagerung auszeichnet, in dem die Lagerung zwischen dem Planetengetriebe und dem hydraulischen Motor angeordnet ist, und der Ausgleich der Relativbewegungen zwischen dem Fahrzeugrahmen und der Mischtrommel über ein elastisches Element erreicht wird, wodurch die Lagerung ausschließlich eine Drehbewegung und nicht den Ausgleich zwischen der Trommel und dem Fahrzeugrahmen ermöglichen muss.

Weitere Merkmale sind der Figurenbeschreibung zu entnehmen.

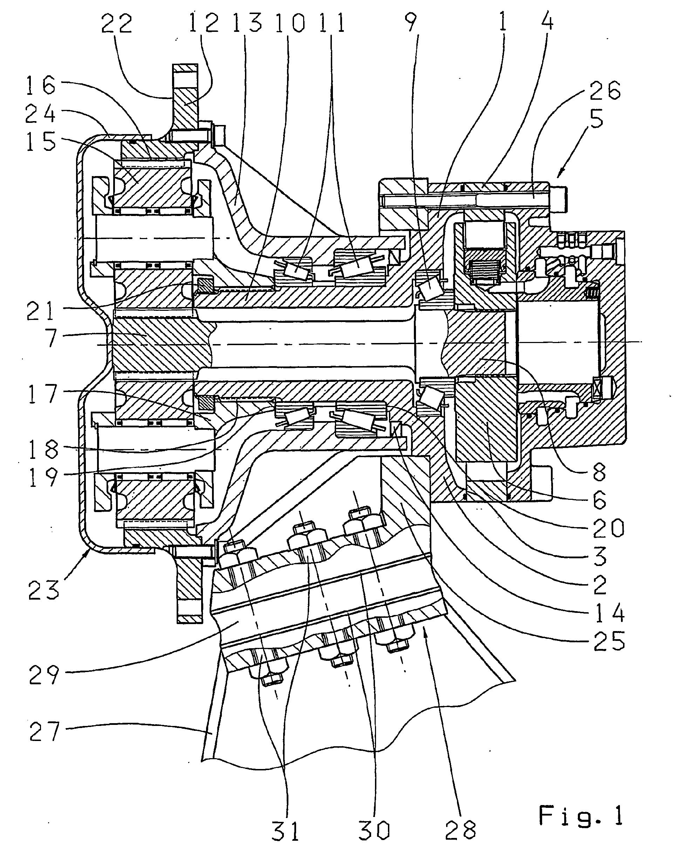

Die einzige Figur zeigt ein Getriebe zum Antrieb einer Trommel eines Fahrmischers, bei welchem das ortsfeste Gehäuseteil 1 einen Flansch 2 aufweist, an dessen Anflanschfläche 3 die Kurvenscheibe 4 eines hydraulischen Radialkolbenmotors 5 anliegt. Der Radialkolbenmotor 5 kann ein Standardradialkolbenmotor sein, welcher an die Anflanschfläche 3 angeflanscht wird. Der Rotationszylinder 6 des Radialkolbenmotors 5 treibt das innere Zentralrad 7 an, welches einstückig mit der Antriebswelle 8 verbunden sein kann oder mehrteilig ausgeführt ist. Der Rotationszylinder 6 ist über eine Lagerung 9 in axialer Richtung auf dem ortsfesten Gehäuseteil 1 gelagert. Das ortsfeste Gehäuseteil 1 weist einen Zapfen 10 auf, auf welchem die Lagerung 11 angeordnet ist, wodurch der Abtriebsflansch 12, welcher mit der Trommel des Fahrmischers verbunden ist, über ein drehbares Gehäuseteil 13 gelagert wird. Zwischen dem drehbaren Gehäuseteil 13 und dem ortsfesten Gehäuseteil 1 ist ein Dichtmittel 14 angeordnet, welches die beiden Teile zueinander flüssigkeitsdicht abdichtet. Das innere Zentralrad 7 treibt über Planetenräder 15 das äußere Zentralrad 16 an, welches mit dem Abtriebsflansch 12 verbunden ist oder mit diesem einstückig ausgebildet ist. Die Planetenräder 15 sind im Planetenträger 17 gelagert, welcher zumindest drehfest mit dem ortsfesten Gehäuseteil 1 verbunden ist. Hierfür weist der Planetenträger eine Bohrung 18 auf, in welcher eine Mitnahmeverzahnung angeordnet ist, welche mit einer Mitnahmeverzahnung auf dem Zapfen 10 in Wirkverbindung steht. Die Lager 11 sind in axialer Richtung über die Anlagefläche 19, die Anlagefläche 20 und die Nutmutter 21 verspannt. Der Abtriebsflansch 12 liegt mit seiner Anlagefläche 22 an der nicht gezeigten Mischtrommel an, wobei die Anlagefläche 22 sich im Bereich des Planetengetriebes 23 befindet. Ein dünnwandiges Gehäuseteil 24 verschließt den Raum, in welchem sich das Planetengetriebe befindet, flüssigkeitsdicht und dient gleichzeitig als axiale Anlagefläche für das innere Zentralrad 7. Ein Fuß 25 ist mit dem ortsfesten Gehäuseteil 1 über Verbindungselemente 26 verbunden, oder kann auch einstückig mit dem ortsfesten Gehäuseteil 1 ausgeführt sein. Es besteht auch die Möglichkeit, über gemeinsame Verbindungselemente den Radialkolbenmotor 5, das ortsfeste Gehäuseteil 1 und den Fuß 25 miteinander verbinden. Der Fuß 25 ist mit einem Lagerbock 27 verbunden, welcher mit dem Rahmen des Fahrzeugs verbunden ist, wobei zwischen dem Fuß 25 und dem Lagerbock 27 ein elastisches Ausgleichselement 28 angeordnet ist, welches Relativbewegungen der Trommel zum Fahrzeugrahmen ermöglicht. Das elastische Ausgleichselement 28 besteht aus einem elastischen Kern 29, welcher mit jeweils einer metallischen Platte 30 verbunden ist, welche über Verbindungselemente 31 einerseits mit dem Fuß 25 und andererseits mit dem Lagerbock 27 verbunden sind.

### Bezugszeichen

- 1: Ortsfestes Gehäuseteil
- 2: Flansch
- 3: Anflanschfläche
- 4: Kurvenscheibe
- 5: Radialkolbenmotor
- 6: Rotationszylinder
- 7: Inneres Zentralrad
- 8: Antriebswelle
- 9: Lagerung
- 10: Zapfen
- 11: Lagerung
- 12: Abtriebsflansch
- 13: Drehbares Gehäuseteil
- 14: Dichtmittel
- 15: Planetenräder
- 16: Äußeres Zentralrad
- 17: Planetenträger
- 18: Bohrung
- 19: Anlagefläche
- 20: Anlagefläche
- 21: Nutmutter
- 22: Anlagefläche
- 23: Planetengetriebe
- 24: Gehäuseteil
- 25: Fuß
- 26: Verbindungselement
- 27: Lagerbock
- 28: Elastisches Ausgleichselement
- 29: Elastischer Kern
- 30: Metallische Platte
- 31: Verbindungselemente

## Patentansprüche

1. Getriebe, insbesondere zum Antrieb einer Trommel eines Fahrmischers, bei welchem ein Abtriebsflansch (12) drehfest mit der Trommel des Fahrmischers verbindbar ist und ein Gehäuse (1) des Getriebes mit einem Fahrzeugrahmen des Fahrmischers verbindbar ist und ein Antriebsmotor (5) ein inneres Zentralrad (7) eines Planetengetriebes (23) antreibt, wobei der Planetenträger (17) mit dem Gehäuse (1) in Verbindung steht und das äußere Zentralrad (16) mit dem Abtriebsflansch (12) verbunden ist, und der Abtriebsflansch (12) über eine Lagerung (11) mit dem Gehäuse (1) in Verbindung steht, wobei in axialer Richtung die Lagerung (11) zwischen dem Planetengetriebe (23) und dem Antriebsmotor (5) angeordnet ist, **dadurch gekennzeichnet, dass** der Antriebsmotor (5) als Radialkolbenmotor mit einer Kurvenscheibe (4) ausgebildet ist und die Kurvenscheibe (4) mit einem ortsfesten Gehäuseteil des Gehäuses (1) verbunden ist und der Antriebsmotor (5) einen Rotationszylinder (6) aufweist, welcher in axialer Richtung über eine Lagerung (9) in dem ortsfesten Gehäuseteil des Gehäuses (1) gelagert ist, wodurch die axialen Kräfte des Antriebsmotors (5) ins Gehäuse eingeleitet werden.

2. Getriebe nach Anspruch 1, **dadurch gekennzeichnet, dass** das ortsfeste Gehäuseteil einen Flansch (2) aufweist mit welchem die Kurvenscheibe (4) des Antriebsmotors (5) verbunden ist.

3. Getriebe nach Anspruch 2, **dadurch gekennzeichnet, dass** die Lagerung (9) zur Aufnahme der axialen Kräfte des Antriebsmotors (5) sich am Flansch (2) abstützt.

4. Getriebe nach Anspruch 2 **dadurch gekennzeichnet, dass** die Lagerung (11) des Abtriebsflansches (12) in axialer Richtung vom Planetenträger (17) und dem Flansch (2) begrenzt ist und auf einem Zapfen (10) des Gehäuses (1), welcher mit dem Planetenträger (17) verbunden ist, angeordnet ist.

5. Getriebe nach Anspruch 2, **dadurch gekennzeichnet, dass** der Flansch (2) einen Zapfen (10) aufweist, welcher die Lagerung (11) des Abtriebsflansches (12) trägt.

6. Getriebe nach Anspruch 1, **dadurch gekennzeichnet, dass** eine Anflanschfläche (22) des Abtriebsflansches (12) im Bereich des Planetengetriebes (23) angeordnet ist.

7. Getriebe nach Anspruch 1, **dadurch gekennzeichnet, dass** das Gehäuse (1) mit einem Fuß (25) verbunden ist, oder mit diesem einstückig ausgebildet ist, welcher über ein flexibles Element (28) mit dem Fahrzeugrahmen verbindbar ist.

8. Getriebe nach Anspruch 7, **dadurch gekennzeichnet, dass** die Lagerung (11), über welche der Abtriebsflansch (12) gelagert ist, als Kegelrollenlager ausgebildet ist und die Relativbewegung zwischen dem Fahrzeugrahmen und der Trommel über das flexible Element (28) ausgeführt wird

## Claims

1. Transmission, in particular for driving a drum of a mixer truck, in which an output flange (12) is connectable in a rotationally fixed manner to the drum of the mixer truck and a housing (1) of the transmission is connectable to a vehicle frame of the mixer truck and a drive motor (5) drives an inner central wheel (7) of a planetary gear (23), wherein the planet carrier (17) is connected to the housing (1) and the outer central wheel (16) is connected to the output flange (12), and the output flange (12) is connected by a bearing arrangement (11) to the housing (1), wherein in axial direction the bearing arrangement (11) is disposed between the planetary gear (23) and the drive motor (5), **characterized in that** the drive motor (5) takes the form of a radial piston motor having a cam disk (4) and the cam disk (4) is connected to a stationary housing part of the housing (1) and the drive motor (5) comprises a rotating cylinder (6), which is mounted in axial direction by means of a bearing arrangement (9) in the stationary housing part of the housing (1), with the result that the axial forces of the drive motor (5) are introduced into the housing.

2. Transmission according to claim 1, **characterized in that** the stationary housing part comprises a flange (2), to which the cam disk (4) of the drive motor (5) is connected.

3. Transmission according to claim 2, **characterized in that** the bearing arrangement (9) for take-up of the axial forces of the drive motor (5) is supported against the flange (2).

4. Transmission according to claim 2, **characterized in that** the bearing arrangement (11) of the output flange (12) is delimited in axial direction by the planet carrier (17) and the flange (2) and is disposed on a journal (10) of the housing (1) that is connected to the planet carrier (17).

5. Transmission according to claim 2, **characterized in that** the flange (2) comprises a journal (10) that carries the bearing arrangement (11) of the output flange (12).

6. Transmission according to claim 1, **characterized in that** a flange-mounting surface (22) of the output flange (12) is disposed in the region of the planetary gear (23).

7. Transmission according to claim 1, **characterized in that** the housing (1) is connected to or integrally formed with a foot (25), which is connectable by a flexible element (28) to the vehicle frame.

8. Transmission according to claim 7, **characterized in that** the bearing arrangement (11), by means of which the output flange (12) is mounted, takes the form of a taper roller bearing and the relative movement between the vehicle frame and the drum is realized by means of the flexible element (28).

## Revendications

1. Mécanisme, en particulier pour l'entraînement d'un tambour d'un malaxeur sur véhicule, dans lequel un flasque de sortie (12) peut être relié solidairement au tambour du malaxeur sur véhicule, un carter (1) du mécanisme peut être relié à un châssis de véhicule du malaxeur sur véhicule, et un moteur d'entraînement (5) entraîne une roue centrale intérieure (7) d'un train épicycloïdal (23), dans lequel le porte-satellites (17) est relié au carter (1) et la roue centrale extérieure (16) est reliée au flasque de sortie (12), et le flasque de sortie (12) est en liaison avec le carter (1) par l'intermédiaire d'un palier (11), le palier (11) étant disposé axialement entre le train épicycloïdal (23) et le moteur d'entraînement (5), **caractérisé en ce que** le moteur d'entraînement (5) est constitué par un moteur à pistons radiaux comprenant une couronne formant came (4), la couronne formant came (4) est reliée à une partie fixe du carter (1), et le moteur d'entraînement (5) comporte un cylindre tournant qui est monté rotatif dans la direction axiale dans la partie fixe du carter (1), par l'intermédiaire d'un palier (9), de sorte que les forces axiales du moteur d'entraînement (5) sont transmises au carter.

2. Mécanisme selon la revendication 1, **caractérisé en ce que** la partie fixe du carter comporte un flasque (2) auquel la couronne formant came (4) du moteur d'entraînement (5) est reliée.

3. Mécanisme selon la revendication 2, **caractérisé en ce que** le palier (9) prend appui sur le flasque (2) pour absorber les forces axiales du moteur d'entraînement (5).

4. Mécanisme selon la revendication 2, **caractérisé en ce que** le palier (11) du flasque de sortie (12) est limité dans la direction axiale par le porte-satellites (17) et par le flasque (2), et est disposé sur un tourillon (10) du carter (1) qui est relié au porte-satellites (17).

5. Mécanisme selon la revendication 2, **caractérisé en ce que** le flasque (2) comporte un tourillon (10) qui porte le palier (11) du flasque de sortie (12).

6. Mécanisme selon la revendication 1, **caractérisé en ce qu'**une surface de montage (22) du flasque de sortie (12) est placée dans la région du train épicycloïdal (23).

7. Mécanisme selon la revendication 1, **caractérisé en ce que** le carter (1) est relié à un pied (25), ou est réalisé en une seule pièce avec ce pied, lequel peut être relié au châssis du véhicule au moyen d'un élément flexible (28).

8. Mécanisme selon la revendication 7, **caractérisé en ce que** le palier (11) par l'intermédiaire duquel le flasque de sortie (12) est monté rotatif est constitué par un palier à rouleaux coniques et le mouvement relatif entre le châssis du véhicule et le tambour se produit par l'intermédiaire de l'élément flexible (28).
